# FASCICULE DE BREVET EUROPEEN

(11) **EP 3 482 131 B1**
(45) Date de publication et mention de la délivrance du brevet: **10.03.2021**
(21) Numéro de dépôt: 17742820.8
(22) Date de dépôt: 29.06.2017
(51) Int. Cl.: F23L 15/04, F23N 3/00, F23L 7/00, F28D 15/00, F24H 9/00

(54) **PROCÉDÉ DE PRÉCHAUFFAGE D'UN FLUIDE EN AMONT D'UN FOUR**
VERFAHREN ZUM VORHEIZEN EINES FLUIDS VOR EINEM OFEN
METHOD FOR PREHEATING A FLUID UPSTREAM OF A FURNACE

(30) Priorité: 08.07.2016 FR 1656584
(43) Date de publication de la demande: 15.05.2019
(73) Titulaire: L'Air Liquide Société Anonyme pour l'Etude et l'Exploitation des Procédés Georges Claude, 75007 Paris (FR)
(72) Inventeur: JARRY, Luc, 61270 Beaufai (FR); VAN KAMPEN, Peter, Shanghai, 200233 (CN)
(74) Mandataire: Air Liquide
(86) Numéro de dépôt international: PCT/FR2017/051742
(87) Numéro de publication internationale: WO 2018/007723

(56) Documents cités:
- EP-A1- 0 231 962
- CN-U- 201 680 745

## Description

La présente invention concerne le préchauffage d'un fluide en amont d'un four par échange thermique avec des fumées évacuées du four.

La société Air Liquide a développé et industrialise une technologie d'oxycombustion dans un four, technologie selon laquelle l'oxygène de combustion et le cas échéant également le combustible sont préchauffés en amont du four par échange thermique indirect avec les fumées évacuées du four.

Distinction est faite entre l'échange thermique direct et l'échange thermique indirect.

Lors d'un échange thermique direct, un fluide est chauffé avec un fluide plus chaud par échange thermique à travers une paroi qui sépare le fluide à chauffer du fluide plus chaud.

Par échange thermique indirect, on comprend un échange thermique en deux étapes d'échange direct en passant par un fluide intermédiaire.

Ainsi, dans la technologie d'oxycombustion connue de la société Air Liquide :
- un fluide intermédiaire est chauffé par échange thermique directe avec les fumées à travers une première paroi dans une première étape et
- dans une deuxième étape dans laquelle l'oxygène de combustion (et le cas échéant aussi le combustible) est (sont) préchauffé(s) par échange thermique directe avec le fluide intermédiaire chauffé dans la première étape à travers une deuxième paroi.

Une telle technologie est notamment décrite dans WO 2006/054015 dans le contexte d'un échangeur pour four à combustion.

L'exploitation de cette technologie a démontré qu'elle permet des gains en efficacité considérables dans le cas de fours qui fonctionnent en continu et sans modifications significatives fréquentes dans le mode d'opération du four et qui génèrent en continu un débit de fumées chaudes suffisant pour permettre le préchauffage à une température désirée de l'oxygène et/ou du combustible. Le débit et la température des fumées générées par un tel four ne varient donc normalement pas de manière significative ou brusque pendant le fonctionnement du four.

L'échange thermique indirecte est également connu dans le domaine des chaudières d'eau avec brûleur, voir EP-A-0231962, ainsi que dans le domaine des échangeurs de chaleur pour la récupération de chaleur résiduelle des fumées d'une chaudière, voir CN-U-201680745.

EP-A-0231962 décrit un procédé pour le chauffage de l'eau de robinet à l'intérieur d'une chambre de combustion équipée d'un brûleur et en amont de la sortie de fumées de ladite chambre de combustion. La chambre de combustion comporte un échangeur de chaleur consistant en des tubes s'étendant entre deux parois opposées de la chambre de combustion et dans lesquels coule un milieu caloporteur. L'eau de robinet à chauffer coule dans des tuyaux positionnés coaxialement à l'intérieure de certains tubes de l'échangeur de chaleur.

CN-U-201680745 décrit un échangeur de chaleur horizontal à changement de phase apte à être utilisé dans des chaudières à combustion. Ledit échangeur de chaleur comporte un nombre d'unités d'échange de chaleur. Chaque unité d'échange de chaleur comporte un tube intérieur entouré d'un tube extérieur. Le fluide à chauffer coule dans l'espace entre le tube intérieur et le tube extérieur, un fluide d'absorption de chaleur coule dans le tube intérieur. Le débit du fluide d'absorption de chaleur dans le tube intérieur est régulé en fonction d'une température détectée du tube extérieur.

Le but de la présente invention est de fournir une technologie de préchauffage indirect basée sur les principes évoqués ci-dessus qui est plus adaptée pour des fours générant des fumées chaudes dont le débit et/ou la température varient significativement au cours du fonctionnement du four.

Ceci est notamment le cas pour les fours discontinus dont la combustion et donc la production de fumées chaudes sont interrompues pendant des phases d'arrêt du four entre deux phases actives du four et varient selon les phases actives du four.

A cette fin, la présente invention propose un procédé amélioré pour le préchauffage d'un fluide en amont d'un four pour obtenir un fluide préchauffé qui est amené vers le four, le préchauffage du fluide étant par échange thermique avec des fumées évacuées du four à travers une canalisation.

Suivant ce procédé un milieu liquide ou gazeux traverse une chambre à un premier débit. Ce milieu est utilisé en tant que milieu caloporteur entre les fumées chaudes et le fluide à préchauffer.

Les fumées dans la canalisation chauffent le milieu intermédiaire dans la chambre par échange thermique à travers une paroi, dite « première paroi », séparant le milieu intermédiaire qui se trouve dans la chambre des fumées qui se trouvent dans la canalisation d'évacuation, avec obtention d'un milieu chauffé.

Le fluide à préchauffer traverse au moins un conduit à un second débit. Une paroi, dite « deuxième paroi », sépare le fluide à préchauffer qui se trouve dans le au moins un conduit, d'une part, du milieu à l'intérieur de la chambre, d'autre part.

Le fluide à préchauffer peut ainsi traverser un seul tel conduit ou un faisceau de tels conduits. Quand le fluide à préchauffer traverse plusieurs tels conduits, le second débit correspond au débit global du fluide à préchauffer, c'est-à-dire la somme des débits de fluide à préchauffer traversant les différents conduits.

Le au moins un conduit traversé par le fluide à préchauffer peut, par exemple, être situé à l'intérieur de la chambre. Dans ce cas, la paroi extérieur du au moins un conduit à l'intérieur de la chambre constitue la deuxième paroi.

Le milieu chauffé, qui se trouve dans la chambre, préchauffe le fluide qui se trouve dans le au moins un conduit par échange thermique à travers la deuxième paroi. On obtient ainsi un fluide préchauffé qui est amené vers le four en vue de son introduction dans le four.

Suivant la présente invention, on régule le premier débit, c'est-à-dire le débit du milieu (fluide caloporteur) dans la chambre, en fonction d'au moins une des températures suivantes :
- la température des fumées dans la canalisation,
- la température du milieu chauffé,
- la température du fluide préchauffé, et
- la température de la première paroi.

Suivant l'invention, le premier débit peut être régulé en fonction d'une seule desdites températures. Il est également possible et généralement avantageux de réguler le premier débit en fonction de plusieurs desdites températures, par exemple en fonction de :
- la température des fumées dans la canalisation et la température du milieu chauffé ;
- la température des fumées dans la canalisation et la température du fluide préchauffé ;
- la température des fumées dans la canalisation et la température de la première paroi ;
- la température du milieu chauffé et la température du fluide préchauffé ;
- la température du milieu chauffé et la température de la première paroi ;
- la température du fluide préchauffé et la température de la première paroi ;
- la température des fumées dans la canalisation, la température du milieu chauffé et la température du fluide préchauffé ;
- la température des fumées dans la canalisation, la température du milieu chauffé et la température de la première paroi ;
- la température des fumées dans la canalisation, la température du fluide préchauffé et la température de la première paroi ;
- la température du milieu chauffé, la température du fluide préchauffé et en fonction et la température de la première paroi ;
- la température des fumées dans la canalisation, la température du milieu chauffé, la température du fluide préchauffé et la température de la première paroi.

Le procédé suivant la présente invention utilise donc un débit variable du milieu dans la chambre. Ceci permet d'adapter la récupération de chaleur et le préchauffage du fluide au fonctionnement du four.

Quand le four est, par exemple, un four discontinu, l'invention permet de régler la récupération de chaleur et le préchauffage du fluide en fonction de l'étape ou de l'état de fonctionnement du four.

Le fluide à préchauffer peut être un oxydant de combustion, et en particulier un tel oxydant ayant une teneur en oxygène de 50%vol à 100%vol, un combustible ou tout autre fluide à fournir au four à température élevée. L'invention est particulièrement avantageuse pour le préchauffage d'un oxydant de combustion. Dans ce cas, l'oxydant de combustion présente avantageusement une teneur en oxygène d'au moins 80%vol, et de préférence d'au moins 90%vol.

L'invention permet également de combiner le préchauffage de plusieurs fluides à préchauffer, par exemple de l'oxydant de combustion et du combustible, chaque fluide à préchauffer traversant alors au moins un conduit dédié audit fluide à préchauffer.

Le milieu qui traverse la chambre (fluide caloporteur) est de préférence un milieu gazeux tel que, par exemple, de l'air, de l'azote, du CO₂ ou de la vapeur. L'utilisation d'air en tant que milieu est souvent préférable à cause de sa disponibilité et son innocuité.

En aval de la chambre, le milieu, qui présente généralement toujours une température supérieure à la température ambiante, peut être utilisé pour d'autres applications (par exemple comme source de chaleur pour le chauffage d'installations ou de bâtiments, dans une installation de séchage, pour la production d'électricité dans un cycle de Rankine ou, quand le milieu est un oxydant, comme oxydant de combustion). Une autre possibilité est de recycler le fluide vers la chambre.

Sauf mesure particulière, telle que l'injection d'air froid dans la canalisation en amont de la chambre, la température et le débit des fumées évacuées sont déterminés par le processus qui a lieu dans le four.

Le débit du fluide à préchauffer dans le au moins un conduit est normalement également déterminé par les besoins du processus dans le four.

La température du milieu chauffé, la température du fluide préchauffé et la température de la première paroi, par contre, peuvent être modifiées en changeant le débit du milieu dans la chambre (premier débit). En effet, à débits et températures identiques (a) des fumées dans la canalisation et (b) du fluide à préchauffer, une augmentation du premier débit (débit du milieu dans la chambre) entraîne une baisse de la température de la première paroi qui sépare les fumées du milieu, une baisse de la température du milieu préchauffé, ainsi qu'une baisse de la température du fluide préchauffé. De manière analogue, à débits et températures identiques des fumées dans la canalisation et du fluide à préchauffer, une réduction du premier débit entraîne une augmentation de la température de la première paroi, une augmentation de la température du milieu préchauffé, ainsi qu'une augmentation de la température du fluide préchauffé.

Le pourcentage de l'énergie thermique évacuée du four par les fumées qui est recyclé vers le four par le fluide préchauffé augmente avec la température de préchauffage Tf dudit fluide.

La présente invention permet de réaliser une température de préchauffage Tf élevée, tout en assurant un niveau de sécurité élevée.

En règle générale, le premier débit est régulé de manière à ce que le fluide préchauffé présente une température Tf au moins égale à une température minimale Tfmin prédéterminée. Quand la température Tf descend en dessous de Tfmin, le premier débit est réduit de manière à augmenter la température du milieu chauffé et ainsi également la température Tf du fluide préchauffé. Cette température minimale Tfmin peut être constante ou peut varier dans le temps (Tfmin(t)) en fonction des changements/de l'état d'avancement du processus ayant lieu dans le four. Tfmin est typiquement déterminée de manière à assurer un certain niveau d'amélioration d'efficacité énergétique grâce au préchauffage du fluide.

Suivant une première forme de réalisation, on régule le premier débit de manière à ce que la température Tpp de la première paroi reste inférieure ou égale à une première température maximale Tppmax prédéterminée. Cette température Tppmax est typiquement une constante. Tppmax dépend normalement de la nature du ou des matériaux constitutifs de la première paroi. Plus particulièrement, quand la température Tpp de la première paroi dépasse cette valeur Tppmax, le premier débit est augmenté de manière à baisser la température de la première paroi Tpp. Il convient en effet d'assurer que la température de la chambre et en particulier de la première paroi n'atteint pas une température à laquelle l'intégrité physique de cette structure risque d'être compromise.

Suivant une deuxième forme de réalisation, on régule le premier débit de manière à maintenir la température Tf du fluide préchauffé en dessous d'une deuxième température maximale prédéterminée Tfmax.

Quand la température Tf du fluide préchauffé atteint cette température maximale Tfmax, le premier débit est augmenté de manière à baisser la température Tf du fluide préchauffé. Cette deuxième température maximale Tfmax est également typiquement une constante. Elle dépend généralement de la nature du fluide à préchauffer.

Ainsi, quand le fluide à préchauffer est un oxydant avec une teneur en oxygène entre 50%vol et 100%vol, on peut réguler le premier débit de manière à maintenir la température Tox (=Tf) de l'oxydant préchauffé en dessous d'une température d'oxydant maximale Toxmax prédéterminée. Ceci est notamment utile afin de protéger le au moins un conduit/la deuxième paroi, ainsi que les éléments en contact avec l'oxydant préchauffé en aval du au moins un conduit contre les modifications structurelles pouvant provoquer une corrosion accélérée par l'oxydant préchauffé, voire une auto-inflammation dans certaines conditions de pression. Toxmax peut par exemple être 550°C quand le(s) conduit(s) dans le(s)quel(s) s'écoule l'oxydant préchauffé est (sont) fait(s) en un matériau hautement résistant à l'oxydation, comme notamment l'INCONEL, ou encore 400°C quand le matériau est un matériau moins résistant tel que l'INOX. Comme indiqué ci-dessus, l'oxydant à préchauffer peut notamment avoir une teneur en oxygène d'au moins 80%vol, voire d'au moins 90%vol.

Quand le fluide à préchauffer est un combustible, on peut réguler le premier débit de manière à maintenir la température Tcomb (=Tf) du combustible préchauffé en dessous d'une température de combustible maximale Tcombmax prédéterminée en fonction de la nature du combustible. De cette manière, on peut éviter une dégradation thermique du combustible, par exemple par craquage. Pour le gaz naturel, par exemple, Tcombmax peut être de l'ordre de 450°C pour éviter tout risque de décomposition du gaz naturel à plus haute température, produisant un dépôt de suies.

La régulation du premier débit est de préférence réalisée de manière automatisée au moyen d'une unité de contrôle.

Quand on régule le premier débit de manière à ce que la température Tf du fluide préchauffé est supérieure ou égale à Tfmin et/ou inférieure à Tfmax (telle que Toxmax pour un oxydant ou Tcombmax pour un combustible), il est pratique de mesurer la température Tf du fluide préchauffé et de réguler le premier débit comme décrit ci-dessus en comparant la température Tf mesuré avec la température prédéterminée Tfmin, respectivement Tfmax.

De manière analogue, quand on régule le premier débit de manière à maintenir la température Tpp de la première paroi en dessous de la première température maximale Tppmax, on peut mesurer la température de la première paroi et réguler le premier débit comme décrit ci-dessus en comparant la température Tpp mesurée avec la première température maximale Tppmax.

Etant donné que le fluide est préchauffé par échange thermique avec le milieu dans la chambre, on peut également mesurer la température Tmil du milieu chauffé dans la chambre et réguler le premier débit de manière à ce que la température Tf du fluide préchauffé soit au moins Tfmin et/ou soit inférieure à Tfmax en fonction de la température Tmil mesurée. Par exemple, quand la température mesurée Tmil du milieu chauffé dépasse une troisième température maximale Tmilmax prédéterminée, on augmentera le premier débit afin de baisser la température Tmil du milieu chauffé et de ce fait la température Tf du fluide préchauffé et/ou quand la température mesurée Tmil du milieu chauffé descend en dessous d'une température minimale Tmilmin prédéterminée, on réduit le premier débit de manière à augmenter la température Tmil du milieu chauffé et à augmenter la température Tf du fluide préchauffé.

Il est également possible, pour la régulation du premier débit, de détecter la température Tfum des fumées dans la canalisation en contact avec la première paroi.

En effet, comme indiqué précédemment, les températures du milieu chauffé et du fluide préchauffé sont, pour une installation donnée, déterminées par la température des fumées évacuées en contact avec la première paroi et par la température et le débit (premier débit) du milieu caloporteur introduit dans la chambre.

On peut donc assurer que la température Tf du fluide préchauffé est au moins Tfmin et/ou est inférieure à Tfmax et/ou que la température Tpp de la première paroi ne dépasse pas Tppmax en régulant le premier débit en fonction de la valeur mesurée de la température Tfum des fumées évacuées en contact avec la première paroi.

Par exemple, quand la température Tfum des fumées évacuées en contact avec la première paroi dépasse une quatrième température maximale prédéterminée Tfummax on augmentera le premier débit de manière à baisser la température Tpp de la première paroi, à baisser la température Tmil du milieu chauffé et/ou à baisser la température Tf du fluide préchauffé.

Comme déjà indiqué, il est également possible de combiner les différentes formes de réalisation décrites ci-dessus, par exemple en mesurant différentes températures et en régulant le premier débit en fonction des différentes températures de manière à respecter l'ensemble des critères appliqués préalablement sélectionnés.

Il est connu de l'état de l'art, quand une surchauffe de la première paroi avec les fumées évacuées est à craindre, de refroidir les fumées évacuées du four en amont d'un échangeur de chaleur en injectant de l'air ambiant dans les dites fumées évacuées.

Suivant une forme de réalisation du procédé suivant l'invention, on mesure la température des fumées dans la canalisation d'évacuation du four et on régule la température des fumées en contact avec la première paroi en injectant un gaz refroidissant dans les fumées en amont de la première paroi qui sépare les fumées évacuées du milieu dans la chambre. Le gaz refroidissant peut provenir d'une même source que le milieu qui est introduit dans la chambre. Un tel refroidissement des fumées évacuées est une manière alternative d'assurer que la température Tpp de la première paroi reste en dessous de la température Tppmax prédéterminée.

Comme déjà indiqué, la régulation du premier débit est de préférence réalisée de manière automatisée au moyen d'une unité de contrôle. Quand la régulation du premier débit est effectuée sur la base d'une ou de plusieurs températures mesurées, la ou les température(s) mesurée(s) est ou sont fournie(s) à ladite unité de contrôle.

Quand le procédé suivant l'invention comporte une étape de refroidissement des fumées évacuées par injection d'un gaz de refroidissement dans les fumées en amont de la première paroi, le débit de gaz de refroidissement est avantageusement également régulé par ladite unité de contrôle, voire la répartition entre le débit du milieu dirigé vers la chambre et le débit du gaz de refroidissement injecté dans les fumées quand le milieu et le gaz de refroidissement proviennent d'une même source.

Le premier débit et/ou le débit du gaz de refroidissement sont avantageusement régulés non seulement de manière à, comme indiqué ci-dessus, maintenir la température Tf et/ou la température Tpp dans une plage de température désirée, mais également de manière à éviter des choques thermiques au niveau de la chambre (et en particulier au niveau de la première paroi).

Le débit du milieu dans la chambre (premier débit) peut être régulé de différentes manières, et en particulier :
- en ajustant la vitesse d'une pompe ou d'une soufflante à vitesse variable qui assure l'écoulement du milieu à travers la chambre, ou
- en ajustant l'ouverture d'une vanne de régulation, par exemple une vanne de régulation sur une canalisation amenant le milieu vers la chambre, une vanne de régulation sur une canalisation évacuant le milieu chauffé de la chambre, ou d'une autre vanne déterminant directement ou indirectement le débit de milieu vers la chambre.

Le four dont les fumées sont évacuées et vers lequel le fluide préchauffé est dirigé peut être un four dit « continu ». Comme indiqué ci-dessus, l'invention est en particulier destinée à être utilisé sur des fours/procédés générant des fumées chaudes dont le débit et/ou la température varient significativement au cours du fonctionnement du four. Dans le cas d'un four continu, ces variations peuvent être intrinsèques au procédé mis en œuvre dans le four, peuvent être liées à des changements dans la production (débit, propriétés du produit traité ou généré) et/ou peuvent être la conséquence de phénomènes progressifs tels que l'usure, l'encrassement, etc. de l'installation.

Le four peut également être un four discontinu, par exemple :
- un four rotatif de fusion de fonte,
- un four rotatif de fusion et de recyclage de métaux non ferreux,
- un four basculant de fusion et de recyclage de métaux non ferreux,
- un four rotatif ou basculant pour la fusion des émaux,
- un four de fusion et de recyclage de métaux de type four à arc (en anglais : Electric Arc Furnace ou EAF).

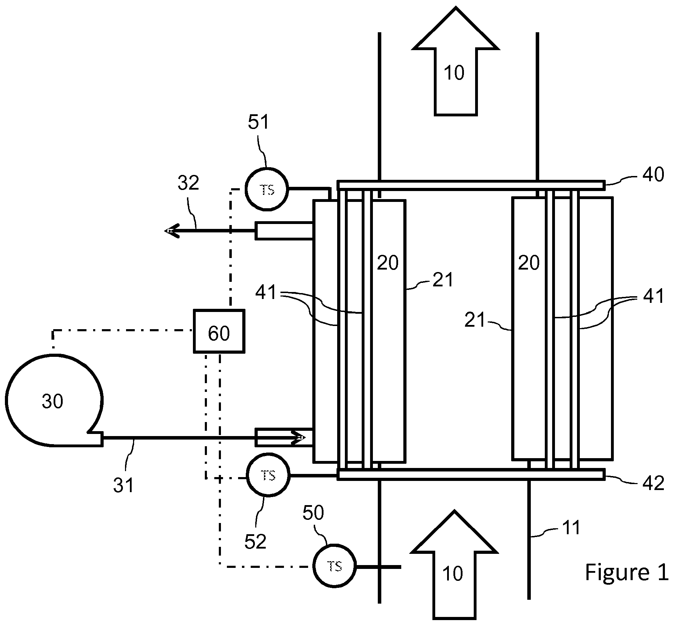

Le procédé suivant la présente invention et ses avantages sont décrits plus en détail dans les exemples ci-après, référence étant faite aux figures 1 à 2 qui sont deux représentations schématiques partielles d'un procédé suivant l'invention et d'une installation (en section transversale) pour sa mise en œuvre.

Selon l'exemple illustré dans la figure 1, les fumées chaudes 10 générées dans le four (non-représenté) sont évacuées du four à travers la canalisation 11.

Une chambre 20 entoure la canalisation d'évacuation des fumées 11.

Une soufflante d'air ambiant 30 à vitesse variable introduit un débit régulé d'air ambiant 31 dans la chambre 20 de manière à créer un écoulement d'air dans la chambre 20 en co-courant avec l'écoulement des fumées 10 dans la canalisation 11.

Une première paroi 21 sépare physiquement les fumées 10 dans la canalisation 11 de l'air dans la chambre 20 de manière à permettre un échange thermique entre les fumées 10 dans la canalisation 11 et l'air dans la chambre 20 à travers cette première paroi 21. L'air dans la chambre 20 absorbe ainsi une partie de la chaleur qui a été évacuée du four avec les fumées. De l'air chauffé est ainsi obtenu dans la chambre 20.

Un fluide 40 à préchauffer est introduit dans un faisceau de conduits 41 qui traversent la chambre 20. La paroi extérieure desdits conduits 41 (dite deuxième paroi) sépare le fluide dans les conduits 41 physiquement du milieu (air) dans la chambre 20. Cette deuxième paroi fonctionne en tant que surface d'échange de chaleur entre l'air et le fluide à préchauffer de manière à obtenir du fluide préchauffé 42. L'air dans la chambre 20 joue donc le rôle de fluide caloporteur entre les fumées chaudes 10 dans la canalisation 11 et le fluide à préchauffer dans les conduits 41.

Le fluide préchauffé 42 est ensuite évacué du faisceau de conduits 41 et amené vers le four.

Quand le fluide préchauffé 42 est un oxydant de combustion ou un combustible, l'oxydant ou le combustible préchauffé est typiquement amené vers un ou plusieurs brûleurs du four et/ou injecteurs par le(s)quel(s) le fluide préchauffé est injecté dans le four.

Après le préchauffage du fluide, l'air 32 est évacuée de la chambre 20, typiquement afin d'être utilisé comme source de chaleur ou comme comburant dans une installation en aval.

Comme décrit ci-dessus, dans certains cas la température des fumées chaudes 10 en contact avec la première paroi 21 est tellement élevée qu'une surchauffe de la première paroi 21 est possible et des mesures doivent être prévues pour éviter une telle surchauffe (notamment une injection de gaz de refroidissement dans les fumées chaudes 10 et/ou une augmentation du premier débit).

Dans d'autres cas, l'énergie thermique présente dans les fumées chaudes 10 et disponible pour le préchauffage du fluide à préchauffer ne suffit pas afin de préchauffer le fluide à une température optimale en amont du four. De l'air chauffé 32 évacué de la chambre 20 peut alors être injecté dans les fumées chaudes 10 au niveau de la chambre 20 pour provoquer une combustion (dite post combustion) du CO et/ou d'autres imbrûlées et/ou produits de combustion partielle dans les fumées chaudes 10. Une telle post combustion permet d'augmenter la température des fumées 10 au niveau de la chambre 20 et ainsi de chauffer le fluide 40 (par exemple de l'oxygène ou du gaz naturel) à plus haute température.

Dans l'exemple illustré dans la figure 1, le fluide à préchauffer est un oxydant de combustion (comburant) présentant une teneur en oxygène de 97%vol au moins qui coule dans les conduits 41 en contre-courant avec l'air dans la chambre 20.

Un premier détecteur de température (thermocouple) 50 détecte la température Tfum des fumées chaudes 10 dans la canalisation 11 directement en amont de la chambre 20.

Un deuxième détecteur 51 détecte la température Tmil de l'air chauffé à proximité de la sortie d'air chauffé de la chambre 20. Dans la forme de réalisation illustrée, le deuxième détecteur 51 détecte plus précisément la température Tg de la paroi de la chambre 20 en contact avec l'air chauffé à cet endroit, la température Tg étant ainsi une mesure pour la température Tmil de cet air chauffé.

Un troisième détecteur 52 détecte la température Tf du fluide préchauffé à la sortie du faisceau de conduits 41.

Chacun des trois détecteurs 50, 51 et 52 est relié à une unité de contrôle 60 qui régule la vitesse de la soufflante d'air 30 et ainsi également le débit d'air ambiant 31 qui est fourni à la chambre 20.

Le logiciel de l'unité 60 calcule, au moins de manière approximative, la température de la première paroi sur la base de la température des fumées chaudes 10 détectée par le premier détecteur 50 et le débit et la température connus de l'air ambiant. L'unité de contrôle 60 vérifie ensuite si le débit d'air ambiant généré par la soufflante 30 est tel que la température Tpp de la première paroi 21 ne dépassera pas une température maximale Tppmax prédéterminée (en comparant la valeur calculée avec la valeur Tppmax). Si le débit d'air ambiant actuel (premier débit) ne suffit pas pour assurer le refroidissement nécessaire de la première paroi 21, de manière à ce qu'une surchauffe de la première paroi 21 est à craindre, l'unité de contrôle augmente la vitesse de la soufflante d'air 30 et ainsi aussi le débit d'air ambiant 31 vers la chambre 20.

L'unité de contrôle 60 compare également la température Tf (plus particulièrement Tox dans la forme de réalisation illustrée) du fluide préchauffé détectée par le troisième détecteur 52 avec une valeur maximale Tfmax (plus particulièrement Toxmax) prédéterminée. Quand la température Tf détectée atteint la valeur maximale Tfmax, l'unité de contrôle 60 augmente la vitesse de la soufflante d'air 30 et ainsi également le débit d'air ambiant 31 vers la chambre 20, ce qui entraîne finalement une baisse de la température Tf du fluide préchauffé.

L'unité de contrôle 60 compare également la température Tf détectée par le détecteur 52 avec une température minimale Tfmin pour le fluide préchauffé, température minimale qui peut évoluer dans le temps en fonction des besoins du processus ayant lieu dans le four. Si la température Tf détectée est inférieure à la température minimale Tfmin, l'unité de contrôle réduit la vitesse de la soufflante d'air 30 et ainsi également le débit d'air ambiant 31 vers la chambre 20 afin de réaliser une température de préchauffage Tf plus élevée du fluide à la sortie du faisceau de conduits 41. Toutefois, les consignes liées aux températures maximales Tppmax et Tfmax priment pour des raisons de sécurité. L'unité de contrôle 60 maintient donc à tout moment la vitesse de la soufflante d'air 30 au dessus de la vitesse à laquelle la température Tpp dépasserait la température maximale Tppmax prédéterminée et au dessus de la vitesse à laquelle la température Tf atteindrait ou dépasserait la température Tfmax.

Sur la base de la température Tg détectée par le deuxième détecteur 51, l'unité de contrôle vérifie le bon fonctionnement de la chambre 20 et des deux détecteurs 50 et 52. A cette fin, l'unité de contrôle 60 vérifie si la température Tg de la chambre détectée par le deuxième détecteur 51 correspond en substance à la température qui était théoriquement/mathématiquement à prévoir au vu de la température Tfum détectée des fumées chaudes, de la vitesse de la soufflante 30 et la température connue de l'air ambiante, du débit du fluide à préchauffer et de la température détectée Tf du fluide préchauffé à la sortie des conduits 41. Quand la température Tg détectée se distingue significativement de cette température théorique/mathématique, l'unité de control 60 émet un signal d'alerte. En effet, une différence significative entre la température Tg détectée et la température théorique/mathématique peut signifier une défaillance d'un des détecteurs 50 et 52, ou encore une fuite dans la chambre 20 ou dans les conduits 41.

L'étanchéité de la chambre 20 peut aussi être vérifiée/surveillée au moyen d'un détecteur de pression (non illustré) qui détecte la pression du milieu dans la chambre 20 ou en aval de la chambre 20. L'unité de contrôle 60 compare la pression détectée avec la pression théorique/mathématique du milieu à prévoir au vu de la pression et du débit du milieu 60 à l'entrée de la chambre 20. L'unité de control 60 émet alors un signal d'alerte quand la pression détectée se distingue significativement de la pression théorique/mathématique.

Le détecteur 51 peut également être utilisé afin d'éviter des chocs thermiques au niveau de la chambre 20, au niveau des conduits 41 et au niveau de la première paroi 21, sachant que de tels chocs thermiques peuvent fragiliser lesdites structures. Ainsi, suivant une forme de réalisation, l'unité de contrôle 60 : (a) vérifie le gradient (vitesse de changement) ΔTmil/Δt de la température Tmil du milieu chauffé (ou le gradient ΔTg/Δt de la température Tg d'une partie de la chambre 20 en contact avec ce milieu chauffé) et (b) régule les variations du premier débit de manière à maintenir ce gradient ΔTmil/Δt (ou ΔTg/Δt) en dessous d'un seuil ΔT/Δt prédéterminé, notamment en limitant le gradient de la vitesse de la soufflante 30 et donc ainsi le gradient du premier débit.

Comme la température du milieu à l'entrée de la chambre 20 (air ambiant dans le présent exemple) peut varier significativement dans le temps, il est utile de prévoir un détecteur de température supplémentaire (non illustré) également lié à l'unité de contrôle 60 qui détecte la température du milieu 31 à l'entrée de la chambre 20. En effet, comme déjà indiqué ci-dessus, la température du milieu 31 à l'entrée de la chambre 20 impacte également la température de la première paroi Tpp, la température du milieu chauffé Tmil et la température du fluide préchauffé Tf. Dans le cas d'un milieu 31 à température significativement variable à l'entrée de la chambre 20 (par exemple en fonction de la température ambiante ou quand le milieu circule dans un circuit fermé), toute variation significative de la température du milieu 31 à l'entrée de la chambre 20 doit également être prise en compte par l'unité de contrôle 60 afin de déterminer le débit (premier débit) avec lequel le milieu 31 doit être fourni à la chambre 20 (par exemple en régulant la vitesse de la soufflante 30) de manière à respecter les critères tels qu'exposés ci-dessus. Par contre, il n'est pas nécessaire d'ajuster le premier débit dans le cas d'une variation non-significative de la température du milieu 31 à l'entrée de la chambre 20.

Il est ainsi utile de fixer un seuil ΔTs (par exemple de l'ordre de 10°C), en dessous duquel les variations de la température du milieu 31 à l'entrée de la chambre 20 sont considérées non-significatives et à partir duquel (≥ΔTs) les variations de température sont considérées significatives au sens du présent paragraphe.

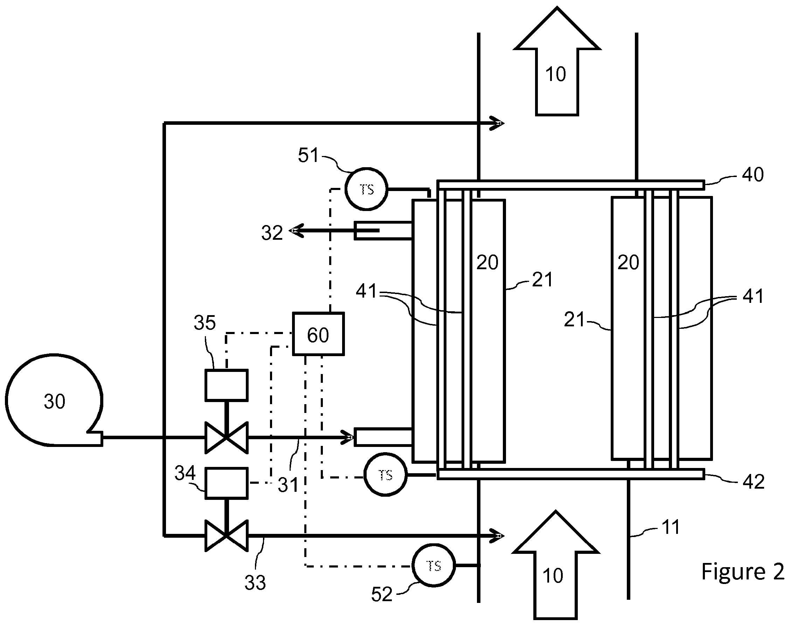

Suivant une forme de réalisation alternative illustrée dans la figure 2, la soufflante 30 est une soufflante d'air à vitesse constante et qui génère donc un débit global constant d'air ambiant.

Suivant la forme de réalisation de la figure 2, la première paroi 21 est protégée contre des températures excessives (au-delà de Tppmax) en baissant la température des fumées chaudes 10 en amont de la chambre 20. A cette fin, le détecteur de température 50 détecte la température Tfum des fumées chaudes 10 dans la canalisation 11 en amont de la chambre 20. Quand la température Tfum des fumées chaudes détectée par le détecteur 50 est telle qu'elle peut conduire à une température Tpp de la première paroi 21 qui dépasse la température maximale Tppmax, en tenant compte du débit (et de la température) du milieu introduit dans la chambre 20, l'unité de contrôle commande un refroidissement desdites fumées chaudes 10 en amont de la chambre 20. Quand la température des fumées chaudes détectée par le détecteur 50 est telle que la température Tpp de la première paroi 21 ne dépassera pas la température maximale Tppmax, l'unité de contrôle 60 commande l'arrêt d'un tel refroidissement des fumées chaudes 10 en amont de la chambre 20. L'unité de contrôle 60 peut plus particulièrement commander le refroidissement des fumées chaudes 10 en amont de la chambre 20 en régulant l'injection à un débit contrôlé d'un gaz de refroidissement 33 dans ces fumées chaudes 10, par exemple en réglant l'ouverture d'une vanne 34 sur une canalisation amenant du gaz de refroidissement 33 vers la canalisation 11.

Dans la forme de réalisation illustrée dans la figure 2, le gaz de refroidissement 33 est une fraction de l'air ambiant fourni par la soufflante 30. Une vanne à ouverture réglable 34 est montée sur une dérivation de la sortie d'air de la soufflante 30, dérivation qui dirige de l'air ambiant 33 vers la canalisation d'évacuation 11 en amont de la chambre 20 pour la régulation de la température Tfum.

Le premier débit (débit d'air ambiant 31 introduit dans la chambre 20) est régulé par l'unité de contrôle 60 au moyen de la vanne 35 sur une deuxième ramification de la sortie d'air de la soufflante 30. L'unité de contrôle 60 régule ce premier débit d'air de manière à atteindre une température Tf du fluide préchauffé 42 appropriée par échange thermique avec le milieu (air) 31 dans la chambre 20, comme décrit en détail en rapport avec la figure 1.

Une autre ramification de la sortie d'air de la soufflante 30 dirige le reste du débit d'air ambiant généré par la soufflante 30 vers la canalisation 11 en aval de la chambre 20.

Cette dernière partie d'air ambiante est utilisée pour le refroidissement des fumées 10 en aval de la chambre 20, par exemple afin de refroidir lesdites fumées à une température de l'ordre de 170°C en amont d'un filtre de poussières (non illustré).

Bien que, dans les deux figures, le medium traverse la chambre 20 en co-courant avec les fumées 10 dans la canalisation 11, le medium peut également traverser la chambre 20 en contre-courant avec les fumées 10 dans la canalisation 11.

De manière analogue, bien que, dans les deux figures, le fluide à préchauffer coule dans le faisceau de conduits 41 en contre-courant avec le milieu dans la chambre, le fluide à préchauffer peut également couler en co-courant avec le médium dans la chambre 20.
- Tf: Température du fluide préchauffé
- Tfmin: Température de préchauffage minimale prédéterminée du fluide
- Tfmax: Température de préchauffage maximale prédéterminée du fluide
- Tox: Température de l'oxydant préchauffé
- Toxmax: Température de préchauffage maximale prédéterminée de l'oxydant
- Tcomb: Température du combustible préchauffé
- Tcombmax: Température de préchauffage maximale prédéterminée du combustible
- Tpp: Température de la première paroi
- Tppmax: Température maximale prédéterminée de la première paroi
- Tmil: Température du milieu chauffé dans la chambre
- Tmilmin: Température minimale prédéterminée du milieu chauffé dans la chambre
- Tmilmax: Température maximale prédéterminée du milieu chauffé dans la chambre
- Tfum: Température des fumées évacuées du four
- Tfummax: Température maximale prédéterminée des fumées évacuées du four
- Tg: Température de la paroi de la chambre en contact avec le milieu chauffé

## Revendications

1. Procédé pour le préchauffage d'un fluide (40) en amont d'un four pour obtenir un fluide préchauffé (42) qui est amené vers le four, le préchauffage du fluide (40) étant par échange thermique avec des fumées (10) évacuées du four à travers une canalisation (11) ; procédé dans lequel :
- un milieu liquide ou gazeux (31) traverse une chambre (20) à un premier débit ;
- les fumées (10) dans la canalisation (11) chauffent le milieu (31) dans la chambre (20) par échange thermique à travers une première paroi (21) séparant le milieu (31) dans la chambre (20) des fumées (10) dans la canalisation (11), avec obtention d'un milieu chauffé (32) ;
- le fluide (40) traverse au moins un conduit (41) à un second débit, le au moins un conduit (41) présentant une deuxième paroi séparant le fluide (40) à l'intérieur du au moins un conduit (41) du milieu (31) à l'intérieur de la chambre (20) ;
- le milieu (31) chauffé dans la chambre (20) préchauffe le fluide (40) dans le au moins un conduit (41) par échange thermique à travers la deuxième paroi, avec obtention du fluide préchauffé (42) ;
- on régule le premier débit en fonction d'au moins une des températures suivantes :
- température Tfum des fumées (10) dans la canalisation (11),
- température Tmil du milieu chauffé (32),
- température Tf du fluide préchauffé (42), et
- température Tpp de la première paroi (21).

2. Procédé suivant la revendication 1, dans lequel le milieu (31) est un milieu gazeux.

3. Procédé suivant la revendication 2, dans lequel le milieu (31) est de l'air, de l'azote, du CO₂ ou de la vapeur, de préférence de l'air.

4. Procédé suivant l'une quelconque des revendications précédentes, dans lequel le premier débit est régulé de manière à ce que la température Tpp de la première paroi (21) reste inférieure ou égale à une première température maximale Tppmax prédéterminée.

5. Procédé suivant l'une quelconque des revendications précédentes, dans lequel le premier débit est régulé de manière à ce que le fluide préchauffé (42) présente une température Tf au moins égale à un température minimale Tfmin prédéterminée.

6. Procédé suivant l'une quelconque des revendications précédentes, dans lequel le fluide (40) est un oxydant de combustion ou un combustible, de préférence un oxydant ayant une teneur en oxygène de 50%vol à 100%vol.

7. Procédé suivant la revendication 6, dans lequel le fluide préchauffé (42) est amené vers un ou plusieurs brûleurs et/ou injecteurs du four par lesquels le fluide préchauffé (42) est injecté dans le four.

8. Procédé suivant l'une quelconque des revendications précédentes, dans lequel le fluide à préchauffer (40) est un oxydant avec une teneur en oxygène entre 50%vol et 100%vol. et dans lequel le premier débit est régulé de manière à maintenir la température Tf du fluide préchauffé (42) en dessous d'une deuxième température maximale Toxmax prédéterminée.

9. Procédé suivant l'une quelconque des revendications 1 à 7, dans lequel le fluide à préchauffer (40) est un combustible et dans lequel le premier débit est régulé de manière à maintenir la température Tf du fluide préchauffé (42) en dessous d'une troisième température maximale Tcombmax prédéterminée

10. Procédé suivant l'une quelconque des revendications précédentes, dans lequel on régule le premier débit en ajustant la vitesse d'une pompe ou d'une soufflante (30) qui assure l'écoulement du milieu (31) à travers la chambre (20).

11. Procédé suivant l'une quelconque des revendications 1 à 9, dans lequel on régule le premier débit au moyen d'une vanne de régulation (35) sur une canalisation amenant le milieu (31) vers la chambre (20).

12. Procédé suivant l'une quelconque des revendications 1 à 9, dans lequel on régule le premier débit au moyen d'une vanne sur une canalisation évacuant le milieu chauffé (32) de la chambre (20).

## Patentansprüche

1. Verfahren zum Vorwärmen eines Fluids (40) stromaufwärts von einem Ofen, um ein vorgewärmtes Fluid (42) zu erhalten, das zu dem Ofen zugeführt wird, wobei das Vorwärmen des Fluids (40) durch Wärmeaustausch mit Rauchgasen (10) ist, die aus dem Ofen durch eine Rohrleitung (11) evakuiert werden; wobei in dem Verfahren:
- ein flüssiges oder gasförmiges Medium (31) mit einem ersten Durchsatz durch eine Kammer (20) tritt;
- die Rauchgase (10) in der Rohrleitung (11) das Medium (31) in der Kammer (20) durch Wärmeaustausch durch eine erste Wand (21), die das Medium (31) in der Kammer (20) von den Rauchgasen (10) in der Rohrleitung (11) trennt, unter Erhalt eines erwärmten Mediums (32) erwärmen;
- das Fluid (40) durch mindestens eine Leitung (41) mit einem zweiten Durchsatz tritt, wobei die mindestens eine Leitung (41) eine zweite Wand aufweist, die das Fluid (40) im Inneren der mindestens einen Leitung (41) des Mediums (31) im Innern der Kammer (20) trennt;
- das in der Kammer (20) erwärmte Medium (31) das Fluid (40) in der mindestens einen Leitung (41) durch Wärmeaustausch durch die zweite Wand unter Erhalt eines vorgewärmten Fluids (42) erwärmt;
- der erste Durchsatz in Abhängigkeit von mindestens einer der folgenden Temperaturen geregelt wird:
- Temperatur Tfum der Rauchgase (10) in der Rohrleitung (11),
- Temperatur Tmil des erwärmten Mediums (32),
- Temperatur Tf des vorgewärmten Fluids (42), und
- Temperatur Tpp der ersten Wand (21).

2. Verfahren nach Anspruch 1, wobei das Medium (31) ein gasförmiges Medium ist.

3. Verfahren nach Anspruch 2, wobei das Medium (31) Luft, Stickstoff, CO₂ oder Dampf, bevorzugt Luft ist.

4. Verfahren nach einem der vorstehenden Ansprüche, wobei der erste Durchsatz so geregelt wird, dass die Temperatur Tpp der ersten Wand (21) kleiner oder gleich einer vorbestimmten ersten Maximaltemperatur Tppmax bleibt.

5. Verfahren nach einem der vorstehenden Ansprüche, wobei der erste Durchsatz so geregelt wird, dass das vorgewärmte Fluid (42) eine Temperatur Tf aufweist, die mindestens gleich einer vorbestimmten Mindesttemperatur Tfmin ist.

6. Verfahren nach einem der vorstehenden Ansprüche, wobei das Fluid (40) ein Verbrennungsoxidationsmittel oder ein Brennstoff ist, bevorzugt ein Oxidationsmittel mit einem Sauerstoffgehalt von 50 Vol.-% bis 100 Vol.-%.

7. Verfahren nach Anspruch 6, wobei das vorgewärmte Fluid (42) einem oder mehreren Brennern und/oder Injektoren des Ofens zugeführt wird, durch die das vorgewärmte Fluid (42) in den Ofen injiziert wird.

8. Verfahren nach einem der vorstehenden Ansprüche, wobei das vorzuwärmende Fluid (40) ein Oxidationsmittel mit einem Sauerstoffgehalt zwischen 50 Vol.-% und 100 Vol.-% ist, und wobei der erste Durchsatz so geregelt wird, dass die Temperatur Tf des vorgewärmten Fluids (42) unter einer zweiten vorbestimmten Maximaltemperatur Toxmax gehalten wird.

9. Verfahren nach einem der Ansprüche 1 bis 7, wobei das vorzuwärmende Fluid (40) ein Brennstoff ist, und wobei der erste Durchsatz so geregelt wird, dass die Temperatur Tf des vorgewärmten Fluids (42) unter einer dritten vorbestimmten Maximaltemperatur Tcombmax gehalten wird.

10. Verfahren nach einem der vorstehenden Ansprüche, wobei der erste Durchsatz durch Anpassen der Geschwindigkeit einer Pumpe oder eines Gebläses (30) geregelt wird, die bzw. das die Strömung des Mediums (31) durch die Kammer (20) sicherstellt.

11. Verfahren nach einem der Ansprüche 1 bis 9, wobei der erste Durchsatz mittels eines Regelventils (35) an einer Rohrleitung geregelt wird, die das Medium (31) zu der Kammer (20) zuführt.

12. Verfahren nach einem der Ansprüche 1 bis 9, wobei der erste Durchsatz mittels eines Ventils an einer Rohrleitung geregelt wird, die das erwärmte Medium (32) aus der Kammer (20) evakuiert.

## Claims

1. Method for preheating a fluid (40) upstream of a furnace to obtain a preheated fluid (42) which is conveyed to the furnace, the preheating of the fluid (40) being by heat exchange with fumes (10) discharged from the furnace through a pipe (11); method wherein:
- a liquid or gas medium (31) passes through a chamber (20) at a first flow rate;
- the fumes (10) in the pipe (11) heat the medium (31) in the chamber (20) by heat exchange through a first wall (21) separating the medium (31) in the chamber (20) from the fumes (10) in the pipe (11), obtaining a heated medium (32);
- the fluid (40) passes through at least one conduit (41) at a second flow rate, the at least one conduit (41) having a second wall separating the fluid (40) inside the at least one conduit (41) of the medium (31) inside the chamber (20);
- the medium (31) heated in the chamber (20) preheats the fluid (40) in the at least one conduit (41) by heat exchange through the second wall, obtaining the preheated fluid (42);
the first flow rate is regulated according to at least one of the following temperatures:
- temperature Tfum of the fumes (10) in the pipe (11),
- temperature Tmil of the heated medium (32),
- temperature Tf of the preheated fluid (42), and
- temperature Tpp of the first wall (21).

2. Method according to claim 1, wherein the medium (31) is a gas medium.

3. Method according to claim 2, wherein the medium (31) is air, nitrogen, CO₂ or steam, preferably air.

4. Method according to any one of the preceding claims, wherein the first flow rate is regulated such that the temperature Tpp of the first wall (21) remains less than or equal to a first predetermined maximum temperature Tppmax.

5. Method according to any one of the preceding claims, wherein the first flow rate is regulated such that the preheated fluid (42) has a temperature Tf at least equal to a predetermined minimum temperature Tfmin.

6. Method according to any one of the preceding claims, wherein the fluid (40) is a combustion oxidant or a fuel, preferably an oxidant having an oxygen content of 50% vol. to 100% vol.

7. Method according to claim 6, wherein the preheated fluid (42) is conveyed to one or more burners and/or injectors of the furnace by which the preheated fluid (42) is injected in the furnace.

8. Method according to any one of the preceding claims, wherein the fluid to be preheated (40) is an oxidant with an oxygen content of between 50% vol. and 100% vol., and wherein the first flow rate is regulated so as to maintain the temperature Tf of the preheated fluid (42) below a second predetermined maximum temperature Toxmax.

9. Method according to any one of claims 1 to 7, wherein the fluid to be preheated (40) is a fuel and wherein the first flow rate is regulated so as to maintain the temperature Tf of the preheated fluid (42) below a third predetermined maximum temperature Tcombmax.

10. Method according to any one of the preceding claims, wherein the first flow rate is regulated by adjusting the speed of a pump or of a fan (30) which ensures the flow of the medium (31) through the chamber (20).

11. Method according to any one of claims 1 to 9, wherein the first flow rate is regulated by means of a regulation valve (35) on a pipe conveying the medium (31) to the chamber (20).

12. Method according to any one of claims 1 to 9, wherein the first flow rate is regulated by means of a valve on a pipe discharging the heated medium (32) from the chamber (20).
